Europäisches Patentamt

European Patent Office

Office européen des brevets

(19)

(11) EP 1 178 554 A2

# (12) EUROPEAN PATENT APPLICATION

(43) Date of publication:
06.02.2002 Bulletin 2002/06

(51) Int Cl.7: H01M 8/22, H01M 4/86

(21) Application number: 01306583.4

(22) Date of filing: 31.07.2001

(84) Designated Contracting States:
AT BE CH CY DE DK ES FI FR GB GR IE IT LI LU
MC NL PT SE TR
Designated Extension States:
AL LT LV MK RO SI

(30) Priority: 03.08.2000 JP 2000235777
16.02.2001 JP 2001039761

(71) Applicant: Suda, Seijirau
Fujisawa-shi, Kanagawa-ken (JP)

(72) Inventor: Suda, Seijirau
Fujisawa-shi, Kanagawa-ken (JP)

(74) Representative:
Baverstock, Michael George Douglas et al
BOULT WADE TENNANT, Verulam Gardens 70
Gray's Inn Road
London WC1X 8BT (GB)

Remarks:
A request for correction of two clerical errors in the
description has been filed pursuant to Rule 88 EPC.
A decision on the request will be taken during the
proceedings before the Examining Division
(Guidelines for Examination in the EPO, A-V, 3.).

## (54) Liquid fuel cell

(57) A high-efficiency liquid fuel cell comprises, as an assembly, a negative or hydrogen electrode made from a hydrogen absorbing alloy such as $LaNi_{4.7}Al_{0.3}$ preferably fluorinated on the surface, an aqueous alkaline electrolyte solution in contact with the hydrogen electrode, which contains, as a hydrogen source material, a metal-hydrogen complex compound such as $KBH_4$ and $LiAlH_4$ dissolved in an aqueous alkaline solution, a positive or oxygen electrode, an oxygen source in contact with the oxygen electrode and a permeable membrane partitioning the space between the electrodes. The oxygen source in contact with the oxygen electrode can be either an oxidizing gas such as oxygen and air or an aqueous solution of a water-soluble oxidizing compound such as hydrogen peroxide.

FIG. 1

EP 1 178 554 A2

Printed by Jouve, 75001 PARIS (FR)

## Description

The present invention relates to a fuel cell of a novel type capable of generating electricity with high efficiency in which an aqueous solution containing a negative hydrogen ion-generating substance serves dually as an electrolyte solution on one hand and as a hydrogen supply source on the other.

As is known, a fuel cell is a device for electric power generation by the direct conversion of changes in free energy into electric energy in which a chemical reaction is conducted by continuously introducing a fuel substance to the negative electrode and an oxidizing compound capable of oxidizing the fuel to the positive electrode. Examples of the fuel substance introduced to the negative electrode heretofore proposed include hydrogen gas, hydrocarbon compounds such as methane, alcohols such as methyl alcohol and others either in gaseous form or in liquid form. The oxidizing compound to be introduced to the positive electrode to effect oxidation of the fuel is usually in gaseous form such as air.

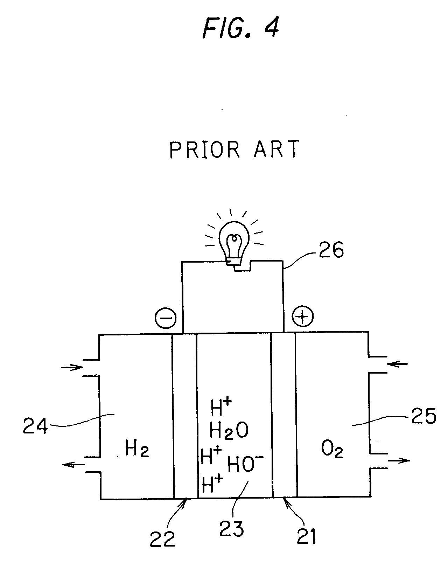

A fuel cell of the simplest type is, for example, the hydrogen/oxygen fuel cell illustrated in Figure 4. In this fuel cell, the positive electrode 21 and negative electrode 22 are each formed of a porous plate of carbon bearing platinum black as the catalyst deposited into the pores and the space between the electrodes is filled with a dilute aqueous solution of sulfuric acid or aqueous solution of phosphoric acid to serve as an electrolyte solution. When the external circuit 26 connecting the electrodes 21,22 is closed and when with the fuel gas compartment 24 and the oxidant gas compartment 25 are filled with hydrogen gas and oxygen gas, respectively, a flow of electrons is obtained from the negative electrode 22 to the positive electrode 21 through the external circuit 26 so as to accomplish power generation.

Fuel cells are usually classified according to the type of the electrolyte into acidic electrolyte fuel cells, alkaline electrolyte fuel cells, solid electrolyte fuel cells and molten-salt electrolyte fuel cells. Alternatively, fuel cells are classified according to the type of the fuel substances, into hydrogen/oxygen fuel cells, methane fuel cells, hydrazine fuel cells and so on.

Additionally, an electrolytic cell is disclosed in U.S. Patent 5,804,329 which utilises an aqueous solution of a borohydride compound such as $KBH_4$ and $NaBH_4$ as the fuel source, which is oxidized in the cell into a boron oxide compound simultaneously with generation of an electric current through an external circuit.

In this electrolytic cell, protiums H° are first generated on the surface of the negative electrode followed by conversion of the protiums into protons so as to utilize the electrons generated there to obtain an electric current.

In the above described fuel cells, atomic hydrogen or, specifically, protium is first generated from hydrogen or a hydride compound introduced as the fuel source followed by the conversion of the protium into proton on the hydrogen electrode with concurrent release of an electron to obtain an electric current so that one hydrogen atom can release only a single electron, giving a relatively low efficiency of power generation.

The present invention has an object to provide a novel and improved fuel cell system capable of generating electric power in outstandingly high efficiency by utilization of simple and inexpensive materials capable of releasing negative hydrogen ions, referred to as hydrogenions hereinafter, as the fuel source and conversion of the hydrogenions at one time into protons to generate two electrons from a single hydrogen atom.

With the above mentioned object to develop a novel and improved fuel cell system to utilize hydrogenions as the fuel source, the inventor has conducted extensive investigations arriving at a discovery that a compound containing a dormant hydrogenion and capable of releasing a negative hydrogen ion, such as a metal-hydrogen complex compound of the formula $M^+[B^{3+}(H^-)_4]$, in which M is an alkali metal, can be used for this purpose along with the use of a material for the hydrogen electrode which promotes generation of the hydrogenions and holds the hydrogenions with stability until full conversion of the same into protons.

Thus, the liquid fuel cell of the novel system provided by the present invention comprises, as an assembly:

(a) a negative electrode which serves as a hydrogen electrode;
(b) a positive electrode which serves as an oxygen electrode counterposed to the negative electrode keeping a space therebetween;
(c) a permeable membrane intervening to partition between the negative electrode and the positive electrode;
(d) an electrolyte solution filling the space between the negative electrode and the positive electrode; and
(e) an oxygen source in contact with the positive electrode;

in which the negative electrode as the hydrogen electrode is made of an unfluorinated or, preferably, fluorinated hydrogen absorbing alloy or a hydrogenated material thereof and the electrolyte solution which serves also as a fuel source is an aqueous solution containing an alkaline compound and a substance capable of generating negative hydrogen ions.

Typically, the aqueous solution containing a substance capable of generating negative hydrogen ions is a solution prepared by dissolving, in an aqueous alkaline solution, a borohydride compound represented by the general formula $M^+[B^{3+}(H^-)_4]$, in which M is an alkali metal element.

In the drawings:

Figures 1 and 2 are each a schematic vertical cross sectional view an embodiment of the inventive liquid fuel cell.

Figure 3 is a graph showing the voltage of the fuel cells prepared in Example 1 using fluorinated and unfluorinated hydrogen absorbing alloys as a function of the current density.

Figure 4 is a schematic vertical cross sectional view of a conventional hydrogen/oxygen fuel cell.

Figure 5 is the voltage-current characteristic curve obtained in Example 3.

As is understood from the above, the most characteristic features of the inventive liquid fuel cell consist, on one hand, in the unique material forming the negative electrode serving as the hydrogen electrode, which is a specific hydrogen absorbing alloy, and, on the other hand, in the electrolyte solution which is an aqueous solution containing a unique compound capable of releasing negative hydrogen ions.

The negative hydrogen ion or, specifically, hydrogenion, involved in this invention is a species expressed by the symbol $H^-$ which is formed from a hydrogen atom by accepting a single electron. Hydrogenion is a counterpart species to proton which is a positively charged species formed when a hydrogen atom loses an electron.

In the following, the liquid fuel cell of the present invention is described in detail, referring to the accompanying drawings.

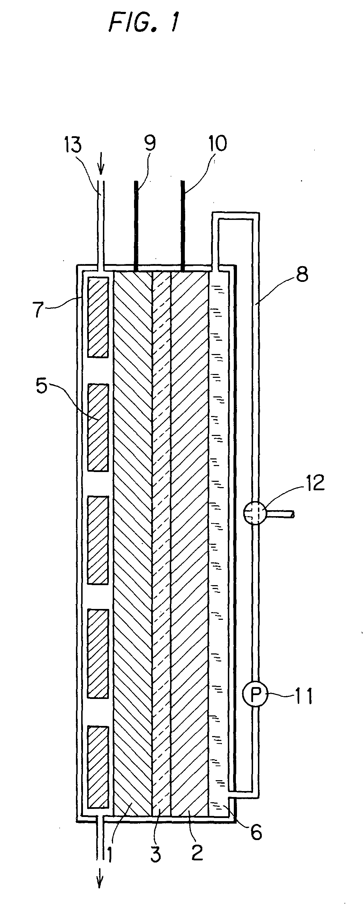

Figure 1 is a vertical cross sectional view of a typical example of the inventive fuel cell schematically showing the structure. The fuel cell is constructed within a casing 7 made from an insulating material such as a plastic resin and the space surrounded by the casing 7 is partitioned with an electrolytic membrane 3 of a polymeric material into two compartments to containing a positive or oxygen electrode 1 and a negative or hydrogen electrode 2 made of a hydrogen absorbing alloy in the respective compartments. The hydrogen electrode 2 is in contact with an electrolyte solution 6 containing a hydrogenion-generating compound introduced into the space inside of the casing 7 and circulated through the pipeline 8 while the oxygen electrode 1 is in contact with the oxidant gas, i.e. oxygen or air, introduced through the inlet pipeline 13 and evenly distributed by means of the disperser board 5.

While species of hydrogen include molecular hydrogen $H_2$, active atomic hydrogen protium $H^0$, positive hydrogen ion proton $H^+$ and negative hydrogen ion hydrogenion $H^-$, the species used in the inventive fuel cell is the hydrogenion. Specifically, an electrode reaction expressed by the equation

$$2H^- \rightarrow 2H^+ + 4e^-,$$

proceeds on the hydrogen electrode 2 to produce two protons from two hydrogenions with release of four electrons.

On the oxygen electrode 1, on the other hand, another electrode reaction proceeds between active oxygen and water according to the equation

$$O_2 + 2H_2O + 4e^- \rightarrow 4OH^-$$

to produce negative hydroxyl ions which return to water molecules by combining with protons according to the equation

$$4OH^- + 4H^+ \rightarrow 4H_2O.$$

An electromotive force is obtained between the oxygen electrode 1 and the hydrogen electrode 2 when the terminal 9 and terminal 10 are connected through an external circuit.

The insulating material forming the casing 7 is not particularly limitative and can be selected for example from metal oxides, insulating ceramics and plastic resins. The polymeric electrolytic membrane 3 partitioning the space inside of the casing 7 is required to have permeability to protons. Nafion (a trade name of Du Pont Co.) is an example of the insulating material of the membrane 3 suitable for the purpose.

The permeable membrane 3, which can be a cationic, anionic or amphoteric ion-exchange membrane, intervening between the positive and negative electrodes must be resistant against attack by both the positive electrode solution, when used, and the negative electrode solution. The permeable membrane 3 may be permeable to anions or, specifically, the hydroxyl ions produced at the positive electrode by the reaction of active oxygen with water but not to the protons produced at the negative electrode or vice versa. If so desired, an amphoteric permeable membrane, which permits permeation of ions of both signs, can also be employed.

Typical examples of membrane material suitable for the permeable membrane 3 in the present invention include membranes of a styrene/divinylbenzene copolymer substituted by sulfonic acid groups or quaternary ammonium base groups, membranes prepared by film-forming from a solution of polyvinylbenzyl trimethylammonium chloride and sodium polystyrenesulfonate in an aqueous medium containing acetone and sodium bromide, membranes of an acrylonitrile/sodium methacrylsulfonate copolymer and so on.

The positive electrode or oxygen electrode 1, on which the reducing reaction of oxygen should proceed smoothly, is made of an electroconductive material selected from carbon and carbonaceous materials, in which platinum is finely dispersed, and metallic materials such as iron, nickel, chromium, copper, platinum and palladium, as well as alloys thereof. It is preferable for high efficiency of power generation, durability and inexpensiveness that the oxygen electrode 1 is made of nickel or a nickel/chromium alloy in the form of a porous body such as a granule-sintered body or metallic spongy body as a base on which a plating layer is formed from a noble metal such as platinum and palladium.

The hydrogen absorbing alloy, from which the negative electrode or hydrogen electrode 2 counterposed to the oxygen electrode 1 is made either in the hydrogenated form or not, is an alloy material capable of reversibly absorbing and desorbing hydrogen. While a great variety of hydrogen absorbing alloys are known in the prior art and any one of them can be used in the present invention without particular limitations, examples of preferable hydrogen absorbing alloys include $Mg_2Ni$-based alloys such as the $Mg_2Ni$ alloy and eutectic alloys of $Mg_2Ni$ and Mg, Laves-phase $AB_2$-type alloys such as the $ZrNi_2$ alloys and $TiNi_2$ alloys, AB-type alloys such as TiFe alloy, $AB_5$-type alloys such as $LaNi_5$ alloys and b.c.c.-type alloys such as $TiV_2$ alloys.

Among the above named various hydrogen absorbing alloys, more preferable are the $LaNi_{4.7}Al_{0.3}$, $MmNi_{0.35}Mn_{0.4}Al_{0.3}Co_{0.75}$, $MmNi_{3.75}Co_{0.75}Mn_{0.20}Al_{0.30}$, $Ti_{0.5}Zr_{0.5}Mn_{0.8}Cr_{0.8}Ni_{0.4}$, $Ti_{0.5}Zr_{0.5}Mn_{0.5}Cr_{0.5}Ni$, $Ti_{0.5}Zr_{0.5}V_{0.75}Ni_{1.25}$, $Ti_{0.5}Zr_{0.5}V_{0.5}Ni_{1.5}$, $Ti_{0.1}Zr_{0.9}V_{0.2}Mn_{0.6}Co_{0.1}Ni_{1.1}$, $MmNi_{3.87}Co_{0.78}Mn_{0.10}Al_{0.38}$ and the like, in which Mm denotes a misch metal.

The material of the substrate, on which a cladding layer of the hydrogen absorbing alloy is formed by thermal spraying to give the hydrogen electrode 2, is not particularly limitative provided that the material is electrically conductive but desirably should have good heat resistance so as not to be damaged in the course of thermal spraying of the alloy particles. Examples of suitable substrate materials include metallic materials such as iron, nickel, chromium, aluminum, titanium, zirconium, gold and platinum as well as alloys containing these metals, silicon semiconductors, electroconductive metal oxides such as titanium dioxide, $In_2O_3/SnO_2$, $LaCrO_3$, $LiNiO_3$ and $LaCoO_3$, and carbonaceous materials such as graphite.

In conducting the thermal spray coating with the hydrogen absorbing alloy for the formation of a cladding layer on the substrate surface, each of the component metals to form the alloy is first pulverized into a powder of fine particles. The method for the pulverization of the metal or alloy is not particularly limitative. For example, an ingot of the metal as cast can easily be pulverized by mechanical means, if necessary, after annealing. Preferably, a metal powder exhibiting good alloying is prepared by the so-called gas atomizing method in which a powder of the metal is obtained directly from a melt of the metal by quenching.

The thus prepared powders of several kinds of metals are blended in a proportion corresponding to the composition of the desired hydrogen absorbing alloy and the powder blend is subjected to thermal spraying onto the substrate surface so as to be alloyed *in situ* forming a thermal-sprayed cladding layer of the hydrogen absorbing alloy. The electric conductivity and heat conductivity of the alloy layer can be controlled by selecting the metal powders and the blending proportion thereof. It is also possible to obtain the alloy in an amorphous state by specifically selecting a particular condition in the thermal spraying.

The thermal spraying methods applicable when a layered structure of a splat in the thermal spray cladding layer of the hydrogen absorbing alloy is desired include the flame spraying method, high-speed gasflame spraying method, explosion thermal spraying method, in-air plasma spraying method, reduced-pressure or vacuum plasma spraying method, arc spraying method, laser thermal spraying method and others, in which fine droplets of the molten alloy having a diameter of 20 to 150 µm are accelerated up to a high velocity of 30 to 500 meters/second to hit the substrate surface. Among the above mentioned various thermal spray cladding methods, the vacuum plasma spraying (VPS) method is particularly preferred, in which the plasma spraying is conducted within a chamber filled with an inert gas under a reduced pressure after purging of the air, for the advantages that a dense cladding layer of the alloy having a high bonding strength can be obtained without degradation of the material characteristics. In this method, the running velocity of the alloy melt droplets reaches 200 to 500 meters/second and the temperature of the alloy melt droplets is as high as 2300 to 2700 °C as a result of the plasma temperature which is usually 5300 to 5700 °C.

The thermal spray cladding layer of the hydrogen absorbing alloy should have a thickness, preferably, in the range from 50 to 300 µm. When the thickness of the cladding layer is too small, the working efficiency of the fuel cell electrode cannot be high enough. On the other hand, no additional advantages can be obtained by increasing the thickness to exceed the above-mentioned upper limit, rather with an economical disadvantage due to extension of the thermal spraying time and increase in the material costs.

It is preferable in the inventive liquid fuel cells that the hydrogen absorbing alloy forming at least the surface layer of the hydrogen electrode, which may optionally be hydrogenated, is in a fluorinated form to accomplish advantages that generation of hydrogenions can be promoted by fluorination of the alloy and that the hydrogen electrode is imparted with improved corrosion resistance against the aqueous solution of the hydrogenion-generating substance to ensure a high power generating capacity of the fuel cell over a long period of time.

The above mentioned fluorinating treatment of the hydrogen absorbing alloy can be performed by immersing the alloy either before or after hydrogenation in an aqueous solution of a fluorinating agent to effect fluorination of the alloy surface. The aqueous fluorinating solution, which contains fluorine ions and alkali metal ions, can be prepared by dissolving an alkali fluoride in water in a concentration of 0.2 to 20% by weight and admixing the solution with hydrofluoric acid so as to bring the pH of the solution to about 2.0 to 6.5 or, preferably, 4.0 to 6.0. The alkali fluoride used here, which should have good solubility in water, can be selected from sodium fluoride, potassium fluoride and ammonium fluoride, of which potassium fluoride is preferred although any of these fluorides can be used either singly or as a combination of two kinds or more.

The optimum range for the concentration of the fluoride compound in the aqueous fluorinating solution depends on the fluoride compounds and should be from 0.3 to 3% by weight for sodium fluoride, from 0.5 to 5% by weight for potassium fluoride and from 0.5 to 8% by weight for ammonium fluoride. When the concentration is too low, an unduly long time is taken for the fluorination treatment of the alloy surface to decrease the practical value of the inventive fuel cell while a too high concentration of the fluoride compound in the solution may result in failure of formation of a fluorinated surface layer having a desired thickness.

The amount of the hydrofluoric acid required for obtaining the above mentioned pH value calculated as hydrogen fluoride is 1 to 3 moles, 0.2 to 3 moles and 0.2 to 1 mole per mole of the alkali fluoride compound which is sodium fluoride, potassium fluoride or ammonium fluoride, respectively.

The fluorinating treatment for the formation of a fluorinated surface layer on the hydrogen absorbing alloy can be conducted by immersing the alloy, either before or after hydrogenation, in the above described fluorinating solution at a temperature of 0 to 80 °C or, preferably, 30 to 60 °C until a fluorinated surface layer having a thickness of 0.01 to 1 $\mu$m is formed. This fluorinating treatment is completed usually within 1 to 60 minutes.

The hydrogenion-generating substance, which constitutes the negative electrode part of the inventive liquid fuel cell in combination with the hydrogen absorbing alloy, is a metal-hydrogen complex compound represented by the general formula

$$M_I^+[M_{II}^{3+}(H^-)_4],$$

in which $M_I$ is an alkali metal such as lithium, sodium, potassium and rubidium and $M_{II}$ is a tervalent element selected from the group consisting of boron, aluminum and gallium. Examples of the metal-hydrogen complex compounds include sodium borohydride $NaBH_4$ and lithium aluminohydride $LiAlH_4$. These metal-hydrogen complex compounds are each a known compound and available on the market as a hydrogenation reagent.

The electrolyte solution in the inventive liquid fuel cell, which serves also as a hydrogenion source, is an aqueous solution prepared by dissolving the above mentioned metal-hydrogen complex compound in an aqueous alkaline solution which can optionally be admixed with a water-miscible organic solvent such as a lower alcohol solvent. The alkaline compound used for making up the above mentioned aqueous alkaline solution is selected from alkali metal hydroxides such as lithium hydroxide, sodium hydroxide and potassium hydroxide and quaternary ammonium hydroxides such as tetramethylammonium hydroxide and tetraethylammonium hydroxide.

The aqueous alkaline solution contains the above-mentioned alkaline compound in a concentration of at least 5% by weight or, preferably, at least 10% by weight. Although the concentration of the alkaline compound has no definite upper limit up to the saturation concentration, the concentration should practically not exceed 30% by weight because of the limited solubility behavior of the metal-hydrogen complex compound in the aqueous alkaline solution when the alkali concentration is excessively high.

The concentration of the metal-hydrogen complex compound dissolved in the aqueous alkaline solution is selected usually in the range from 0.1 to 50% by weight in consideration of the desired power generating capacity of the liquid fuel cell and the solubility behavior of the complex compound in the aqueous alkaline solution. When improvement is desired in the ionic conductivity of the aqueous alkaline solution of which the alkaline compound is not lithium hydroxide, it is optional that the solution is admixed with a small amount or, for example, 0.01 to 0.1% by weight of lithium hydroxide.

In the liquid fuel cell of the invention, the hydrogen electrode or negative electrode is made from a specific hydrogen absorbing alloy either before or after hydrogenation, which preferably is fluorinated in the surface layer. As a consequence of this unique construction of the negative electrode, hydrogenions can be generated at a high efficiency on the electrode surface from the hydrogenion-generating substance in the electrolyte solution to instantaneously accomplish good coordination of the hydrogenions in the interstices of the metallic crystal lattice of the electrode where the hydrogenions are converted into monoatomic species of hydrogen, i. e. protiums, rapidly followed by further conversion of the protium into a proton and an electron, which moves toward the positive electrode, substantially without being accompanied by molecular hydrogen.

As is described above, the most characteristic feature of the inventive liquid fuel cell is the use of an electrolyte solution in contact with the negative electrode to serve also as a hydrogen source so as to facilitate control of the power generation rate by means of the control of the flow rate, temperature and so on of the electrolyte solution. In addition, the substantial absence of gaseous hydrogen on the negative electrode permits use of a pipeline of a relatively small diameter to facilitate control of the pressure and flow rate of the electrolyte solution.

In the example of the inventive liquid fuel cell illustrated in Figure 1, oxygen gas or air is used as the oxidant in the oxygen electrode or positive electrode for the oxidation of the fuel of hydrogen generated in the negative electrode.

In the inventive liquid fuel cell illustrated in Figure 1 as an example, the oxygen electrode 1 and the hydrogen electrode 2 are separated by a partitioning membrane 3 and oxygen gas or air as an oxidant is introduced through the air-inlet 13 to the air-disperser board 5 to be distributed over the whole surface of the oxygen electrode 1. The electrode solution 6, which is an aqueous solution containing a hydrogenion-generating substance, is introduced through the three-way cock 12 and circulated through the pipeline 8 by means of the pump 11 on the pipeline 8 so as to effect power generation. When depletion of the electrolyte solution 6 has proceeded so as to cause a decrease in the activity, the depleted solution is at least partly withdrawn through the three-way cock 12 and a volume of the fresh solution is introduced therethrough into the pipeline 8. It is of course possible to conduct replenishment of the solution 6 continuously by concurrent withdrawal of the depleted solution and introduction of the fresh solution at balanced rates. The terminal 9 of the positive electrode 1 and the terminal 10 of the negative electrode 2 are connected through an external circuit (not shown in the figure) so that an electric current is obtained from the positive terminal 9 to the negative terminal 10.

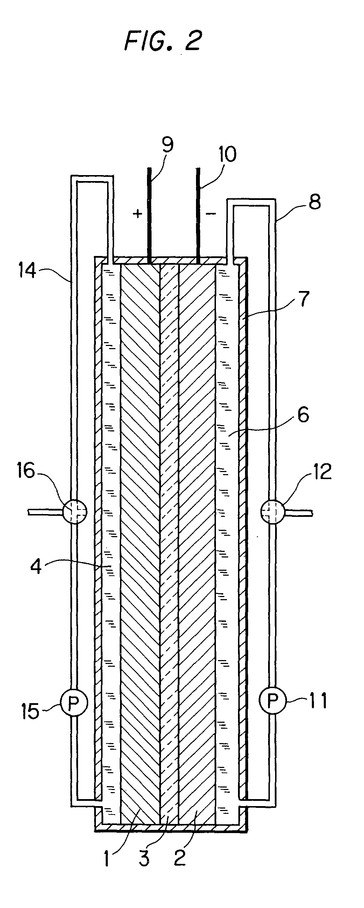

Figure 2 is a vertical cross sectional view for illustration of an alternative embodiment of the inventive liquid fuel cell in which an aqueous solution of an active oxygen-generating agent is used as the oxygen electrode. Specifically, an aqueous solution 4 of a water-soluble active oxygen-generating agent is used in place of the oxygen gas in the fuel cell illustrated in Figure 1. The active oxygen-generating agent contained in the aqueous solution 4 is exemplified by hydrogen peroxide, peracetic acid, dibenzoyl peroxide, isopropyl peroxide or persulfuric acid. The concentration of these active oxygen-generating compounds in the solution is in the range from 1 to 40% by weight or, preferably, from 2 to 10% by weight.

The aqueous solution of these active oxygen-generating compounds can be admixed, if necessary, with a stabilizer such as phosphoric acid, uric acid, hippuric acid, barbital or acetanilide in a concentration of 0.01 to 0.1% by weight.

The aqueous solution 4 containing the active oxygen-generating agent is circulated through the pipeline 14 by means of the pump 15 on the pipeline 14. When the solution 4 has become depleted, the depleted solution 4 can be replaced with an equal volume of the fresh solution by utilizing the three-way cock 16 in the same manner as in replenishing the electrode solution 6 on the negative electrode.

In the liquid fuel cell of the present invention, hydrogenions $H^-$ are utilized as the fuel source. This mechanism is well supported by the facts that the electric power is generated at a voltage higher than in the conventional fuel cells utilizing boron hydride ion $BH_4^-$, that presence of a proton-generating agent causes a decrease in the voltage, that, in the electronic absorption spectrum, photoabsorption assignable to hydrogen atoms different from $H^+$ ions and protons is found, and so on.

By virtue of the utilization of hydrogenions $H^-$, a greatly improved efficiency for power generation can be accomplished with the inventive liquid fuel cell as compared with conventional liquid fuel cells utilizing $BH_4^-$ ions. While the theoretical voltage is 1.64 volts with $BH_4^-$ as the fuel source and oxygen as the positive electrode this theoretical voltage can hardly be accomplished in actual fuel cells. However, this voltage can readily be approached in the liquid fuel cell of the present invention.

When an aqueous solution of an active oxygen-generating agent is employed as the positive electrode solution, moreover, the amount of available oxygen is much larger than when using air or oxygen gas for the oxygen source. For example, a 100 ml volume of a 2% aqueous solution of hydrogen peroxide provides available oxygen in an amount of about 22 times of that in the use of air.

In the following, the liquid fuel cell of the present invention is described in more detail by way of Examples which are preceded by Reference Examples describing the preparation of hydrogen electrodes with a hydrogen absorbing alloy.

Reference Example 1.

A hydrogen electrode having a cladding layer of a hydrogen absorbing alloy on a 50 mm by 50 mm wide nickel plate of 2 mm thickness was prepared using a vacuum plasma jet thermal spraying apparatus (Model VPS System, manufactured by Sulzer Metco Co.) equipped with a 2.6 meter long vacuum chamber of 1.7 meter inner diameter. The 100 μm thick cladding layer of a hydrogen absorbing alloy having a composition expressed by the formula $LamNi_{4.0}Co_{0.4}Mn_{0.3}Al_{0.3}$, in which Lam is a misch metal calculated as lanthanum, was formed by thermal spraying of a powder mixture consisting of powders of a misch metal, nickel, cobalt, manganese and aluminum in a molar proportion corresponding to the above given formula ejected at a velocity of 200 to 400 meters/second in an atmosphere of argon. The temperature of the plasma jet was 5000 to 6000 °C and the temperature of the metal particles was 2500 to 3500 °C. The thus obtained composite electrode was then subjected to a fluorinating treatment by immersion in a 1% by weight aqueous solution of potassium fluoride having a pH of 5.0 as adjusted by the admixture of hydrofluoric acid until the pH had increased to 7.5 taking about 1 hour followed by rinse with water and drying.

Reference Example 2.

Fluorinated particles of a hydrogen absorbing alloy of the composition expressed by the formula $LamNi_{4.0}Co_{0.4}Mn_{0.3}Al_{0.3}$, in which Lam has the same meaning as in Reference Example 1, were prepared by immersing 300 g of the alloy powder having an average particle diameter of 250 μm in about 6000 ml of a 1% by weight aqueous solution of potassium fluoride having a pH of 5.0 by admixture with hydrofluoric acid until the pH had increased to 7.5 followed by rinsing with water and drying.

The thus fluorinated alloy particles were admixed with 1.5% by weight of carboxymethyl cellulose as an aqueous solution so as to have a pasty consistency. A 40 mm by 70 mm wide porous nickel plate of 2 mm thickness having a porosity of 95% and an average pore diameter of 200 μm was coated on both surfaces by smearing with the paste of the alloy powder followed by pressing under a pressure of 980 MPa to form a cladding layer of the alloy particles having a thickness of 700 μm on the surface of the porous nickel plate.

Example 1.

A liquid fuel cell having a structure as illustrated in Figure 1 was constructed using the hydrogen electrode prepared in Reference Example 1 and a palladium-plated porous nickel plate to serve as the oxygen electrode. A cation-exchange membrane (Nafion NE-117, a product of Du Pont Co.) was employed as the partitioning membrane between the electrodes.

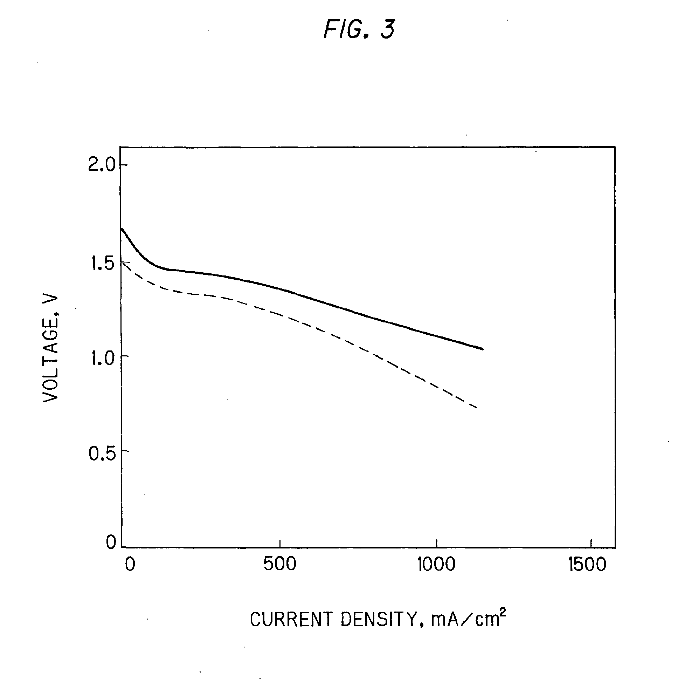

A 20 ml volume of a 30% by weight aqueous potassium hydroxide solution containing potassium borohydride $KBH_4$ in a concentration of 2% by weight to serve as an electrolyte solution and fuel supply source was introduced into the compartment holding the hydrogen electrode through the three-way cock 12 and the pipeline 8 and kept at 25 °C with concurrent supply of air to the oxygen electrode to examine the current/voltage characteristics of the cell. The results are shown in Figure 3 by the solid line curve.

For comparison, the same experimental procedure as above was repeated except that the hydrogen electrode used here was prepared in the same manner as in Reference Example 1 but with omission of the fluorinating treatment of the electrode. The current/voltage characteristic curve of this cell is shown also in Figure 3 by the broken line curve.

Example 2.

A liquid fuel cell having the same structure as that in Example 1 was constructed with the hydrogen electrode prepared in Reference Example 2 and an oxygen electrode which was prepared by press-bonding a carbon powder containing 1% by weight of a platinum catalyst onto a carbon fiber board followed by a water-repellent treatment with a fluorocarbon resin.

This fuel cell was subjected to the measurement of the discharge current to give a value of 180 mA. For comparison, the same experimental procedure was repeated except for the use of another hydrogen electrode which was prepared by omitting the fluorination treatment of the alloy particles. Measurement of the discharge current of this comparative fuel cell gave a value of 80 mA.

Example 3.

A 100 mm by 70 mm wide porous nickel plate of 1.15 mm thickness having a porosity of 99% and an average pore diameter of 400 μm was coated by smearing with a paste consisting of 1.5 g of water and 7.5 g of a powder of a hydrogen absorbing alloy $LaNi_{4.7}Al_{0.3}$ having an average particle diameter of 75 μm followed by drying and then compression forming by a roller press under a linear pressure of 100 kg/cm to give a plate-formed electrode of 45 mm by 70 mm by 1 mm dimensions to serve as the negative electrode. The positive electrode separately prepared was a four-layered stratified body, each layer having 47.5 mm by 70 mm by 1.15 mm dimensions and being prepared from the same porous nickel plate as the base body of the negative electrode.

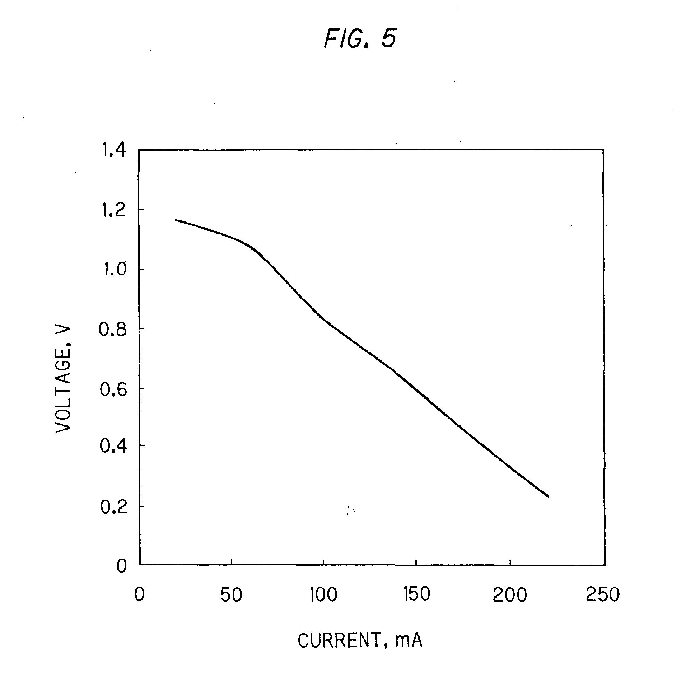

The above prepared negative and positive electrodes were held in a cell casing to stand upright in parallel maintaining a 2 mm wide gap space therebetween with intervention of a proton-exchange polymeric electrolyte membrane (Nafion NE-424, a product of Du Pont Co.) to partition the space into compartments. A 20 ml volume of a 30% by weight aqueous potassium hydroxide solution containing potassium borohydride $KBH_4$ dissolved therein in a concentration of 2% by weight and a 18 ml volume of a 3% by weight aqueous hydrogen peroxide solution containing phosphoric acid in a concentration of 0.01% by weight were introduced into the negative electrode side and the positive electrode side, respectively, and the solutions were kept at a temperature of 25 °C. The negative and positive electrodes were connected by a lead wire to form an external circuit and the voltage/current characteristic of this cell was examined and gave the results shown in Figure 5.

Example 4.

After 100 minutes of power generation in the fuel cell described in Example 3, the electrode solutions on the negative and positive electrodes were each replenished with a fresh solution and the power voltage was measured. This procedure of 100 minutes power generation and replenishment of the electrode solutions was repeated four times to give the results of the power voltages of: 1.21 volts after the first replenishment; 1.35 volts after the second replenishment; 1.46 volts after the third replenishment; and 1.53 volts after the fourth replenishment, indicating gradual approach toward the theoretical voltage of 1.64 volts.

Example 5.

A hydrogen absorbing $Mg_2Ni$ alloy was kept immersed at 50 °C for 20 minutes in an aqueous solution containing 2% by weight of sodium fluoride and 2% by weight of hydrogen fluoride to effect fluorination of the alloy. By using a powder of the thus fluorinated alloy having an average particle diameter of 60 μm, a negative electrode of 45 mm by 70 mm by 1 mm dimensions was prepared in the same manner as in Example 3. The positive electrode used here was a fivefold stack of the same porous nickel plates as used in Example 3 each after a palladium plating treatment by conducting electroless plating at 50 °C for 10 minutes in an electroless plating bath containing 2 g/liter of palladium chloride $PdCl_2$, 1.4 ml/liter of 35% hydrochloric acid, 160 g/liter of 28% ammonia water and 10 g/liter of monosodium phosphate $NaH_2PO_4 \cdot 2H_2O$.

A liquid fuel cell having the same structure as in Example 3 was constructed by using the above prepared negative and positive electrodes and a power generation test was conducted to obtain results of a voltage of 0.7 volt and a current density of 300 $mA/dm^2$ for a discharging duration of 5 hours.

Example 6.

The experimental procedure was substantially the same as in Example 5 except that the 3% by weight aqueous solution of hydrogen peroxide as the positive electrode solution was replaced with a 5% by weight aqueous solution of acetyl peroxide. The results of the power generation test were that the voltage was 0.7 volt and the current density was 450 $mA/dm^2$ for a discharging duration of 5 hours.

**Claims**

1. A liquid fuel cell which comprises, as an assembly:

     (a) a negative electrode which serves as a hydrogen electrode:
     (b) a positive electrode which serves as an oxygen electrode counterposed to the negative electrode keeping a space therebetween;
     (c) a permeable membrane to partition the space between the negative and positive electrodes;
     (d) an electrolyte solution in contact with the negative electrode; and
     (e) an oxygen source in contact with the positive electrode; in which the negative electrode as the hydrogen electrode is made of an unfluorinated or fluorinated hydrogen absorbing alloy before or after hydrogenation and the electrolyte solution which serves also as a fuel source is an aqueous solution containing an alkaline compound and a substance capable of generating negative hydrogen ions.

2. The liquid fuel cell as claimed in claim 1 in which the hydrogen absorbing alloy forming the negative electrode is selected from $LaNi_{4.7}Al_{0.3}$, $MmNi_{0.35}Mn_{0.4}Al_{0.3}Co_{0.75}$, $MmNi_{3.75}Co_{0.75}Mn_{0.20}Al_{0.30}$, $Ti_{0.5}Zr_{0.5}Mn_{0.8}Cr_{0.8}Ni_{0.4}$, $Ti_{0.5}Zr_{0.5}Mn_{0.5}Cr_{0.5}Ni$, $Ti_{0.5}Zr_{0.5}V_{0.75}Ni_{1.25}$, $Ti_{0.5}Zr_{0.5}V_{0.5}Ni_{1.5}$, $Ti_{0.1}Zr_{0.9}V_{0.2}Mn_{0.6}Co_{0.1}Ni_{1.1}$ and $MmNi_{3.87}Co_{0.78}Mn_{0.10}Al_{0.38}$, in which Mm denotes a misch metal.

3. The liquid fuel cell as claimed in claim 1 in which the substance capable of generating negative hydrogen ions contained in the electrolyte solution is a metal-hydrogen complex compound represented by the general formula $M_I^+[M_{II}^{3+}(H^-)_4]$, in which $M_I$ is an alkali metal element and $M_{II}$ is an element of boron, aluminum or gallium.

4. The liquid fuel cell as claimed in claim 3 in which the substance capable of generating negative hydrogen ions is potassium borohydride, sodium borohydride or lithium aluminohydride.

5. The liquid fuel cell as claimed in claim 1 in which the alkaline compound contained in the electrolyte solution is an alkali metal hydroxide.

6. The liquid fuel cell as claimed in claim 5 in which the concentration of the alkali metal hydroxide in the electrolyte solution is in the range from 5 to 30% by weight.

7. The liquid fuel cell as claimed in claim 3 in which the concentration of the metal-hydrogen complex compound in the electrolyte solution is in the range from 0.1 to 50% by weight.

8. The liquid fuel cell as claimed in claim 1 in which the oxygen source is oxygen gas or air.

9. The liquid fuel cell as claimed in claim 1 in which the oxygen source is an aqueous solution of a water-soluble oxidizing compound.

10. The liquid fuel cell as claimed in claim 1 in which the permeable membrane partitioning the space between the negative and positive electrodes is a cation exchange membrane, anion exchange membrane or amphoteric ion exchange membrane.

11. The liquid fuel cell as claimed in claim 1 in which the negative electrode has a layered structure comprising a substrate plate as a core and a cladding layer thereon made from the hydrogen absorbing alloy.

12. The liquid fuel cell as claimed in claim 11 in which the cladding layer of the hydrogen absorbing alloy on the substrate plate has a thickness in the range from 50 to 300 µm.

13. The liquid fuel cell as claimed in claim 11 in which the hydrogen absorbing alloy forming the cladding layer is fluorinated at least in the surface layer.

14. The liquid fuel cell as claimed in claim 13 in which the fluorinated surface layer of the cladding layer of the hydrogen absorbing alloy has a thickness in the range from 0.01 to 1 µm.

FIG. 1

FIG. 2

*FIG. 3*

## FIG. 4

PRIOR ART

FIG. 5